# EUROPEAN PATENT APPLICATION

(11) **EP 4 088 910 A1**
(43) Date of publication of application: **16.11.2022**
(21) Application number: 22171387.8
(22) Date of filing: 03.05.2022
(51) Int. Cl.: B29C 64/218, B29C 64/165, B29C 64/393, B22F 12/63, B22F 10/14, B22F 10/85, B33Y 10/00, B33Y 30/00, B33Y 50/02

(54) **THREE-DIMENSIONAL FABRICATION APPARATUS**

(30) Priority: 12.05.2021 JP 2021081098
(71) Applicant: Ricoh Company, Ltd., Tokyo 143-8555 (JP)
(72) Inventor: HAYAKAWA, Shota, Tokyo, 143-8555 (JP); TSUJI, Masato, Tokyo, 143-8555 (JP); SUN, Yunsheng, Tokyo, 143-8555 (JP); SUZUKI, Haruyuki, Tokyo, 143-8555 (JP); FUJITA, Hayato, Tokyo, 143-8555 (JP)
(74) Representative: SSM Sandmair

(57) **Abstract**

A three-dimensional fabrication apparatus (100) includes a flattening member (40) and a rotation drive unit (45). The flattening member (40) moves on layers of a fabrication material to flatten an upper surface of the layers of the fabrication material. The rotation drive unit (45) rotates the flattening member (40) and determines a circumferential position of the flattening member (40).

## Description

### BACKGROUND

### Technical Field

Aspects of the present disclosure relate to a three-dimensional fabrication apparatus.

### Related Art

There is known a three-dimensional fabrication apparatus that fabricates a solid (three-dimensional) object based on fabrication data.

For example, Japanese Unexamined Patent Application Publication No. 2019-093682 discloses a three-dimensional fabrication apparatus including a rotator that flattens a surface of a fabrication material. The three-dimensional fabrication apparatus controls a rotational phase of the rotator.

However, the three-dimensional fabrication apparatus disclosed in Japanese Unexamined Patent Application Publication No. 2019-093682 does not accurately control the rotational phase of the rotator.

### SUMMARY

The present disclosure has been made in view of the above-described situations, and an object thereof is to improve the accuracy of controlling the rotational phase.

Embodiments of the present disclosure describe an improved three-dimensional fabrication apparatus that includes a flattening member and a rotation drive unit. The flattening member moves on layers of a fabrication material to flatten an upper surface of the layers of the fabrication material. The rotation drive unit rotates the flattening member and determines a circumferential position of the flattening member.

As a result, according to the present disclosure, the accuracy of controlling the rotational phase can be improved.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic plan view of a three-dimensional fabrication apparatus according to embodiments of the present disclosure;
FIG. 2 is a perspective view illustrating a part of the three-dimensional fabrication apparatus during fabrication;
FIG. 3 is a schematic side view of the three-dimensional fabrication apparatus;
FIG. 4 is a perspective view of a fabrication site structure of the three-dimensional fabrication apparatus;
FIG. 5 is a schematic cross-sectional view of the fabrication site structure of the three-dimensional fabrication apparatus during fabrication;
FIG. 6 is a block diagram illustrating a configuration of a rotation drive unit and a controller according to a first embodiment of the present disclosure;
FIG. 7 is a block diagram of the controller of the three-dimensional fabrication apparatus according to the embodiments of the present disclosure;
FIGS. 8A to 8E are schematic views illustrating an operation of the three-dimensional fabrication apparatus when a fabrication layer is formed;
FIG. 9 is a schematic diagram illustrating a state in which an n-th powder layer and an (n+1)-th powder layer are formed by a rotational phase matching control;
FIGS. 10A and 10B are schematic views illustrating an operation of the three-dimensional fabrication apparatus when determining a circumferential position of a flattening roller;
FIG. 11 is a block diagram illustrating a configuration of a rotation drive unit and the controller according to a second embodiment of the present disclosure;
FIG. 12 is a block diagram illustrating a configuration of a rotation drive unit and the controller according to a third embodiment of the present disclosure;
FIG. 13 is a block diagram illustrating a configuration of a rotation drive unit and the controller according to a fourth embodiment of the present disclosure; and
FIGS. 14A to 14C are schematic views illustrating an operation of the three-dimensional fabrication apparatus when determining the circumferential position of the flattening roller according to a variation of the embodiments.

The accompanying drawings are intended to depict embodiments of the present disclosure and should not be interpreted to limit the scope thereof. The accompanying drawings are not to be considered as drawn to scale unless explicitly noted. In addition, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected, and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to drawings. In each of the drawings, the same reference codes are allocated to components or portions having the same configuration, and redundant descriptions of the same components may be omitted.

Further, the embodiments described below are some examples of a three-dimensional fabrication apparatus for embodying the technical idea of the present disclosure, and embodiments of the present disclosure are not limited to the embodiments described below. The dimensions, materials, and shapes of components, relative arrangements thereof, and the like described below are not intended to limit the scope of the present disclosure thereto but are intended to exemplify the present disclosure unless otherwise specified. The size, positional relation, and the like of components illustrated in the drawings may be exaggerated for clarity of description.

Hereinafter, a powder fabrication apparatus is described as an example of the three-dimensional fabrication apparatus. The three-dimensional fabrication apparatus supplies a fabrication material of powder and fabricates a solid (three-dimensional) object. The fabrication material used in the three-dimensional fabrication apparatus according to the present disclosure is not limited to powder, and various materials can be applied. For example, a viscous (semisolid) material may be used as the fabrication material.

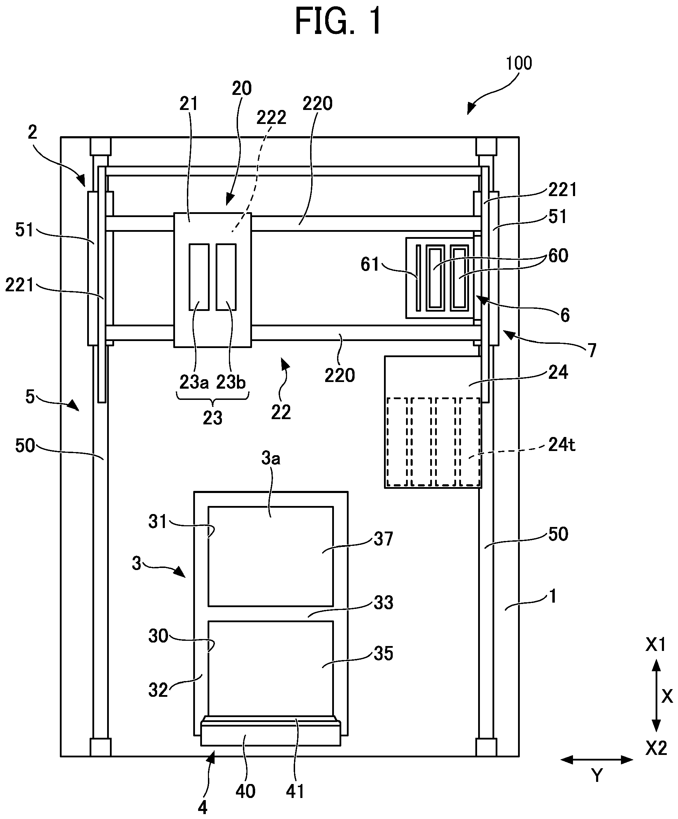

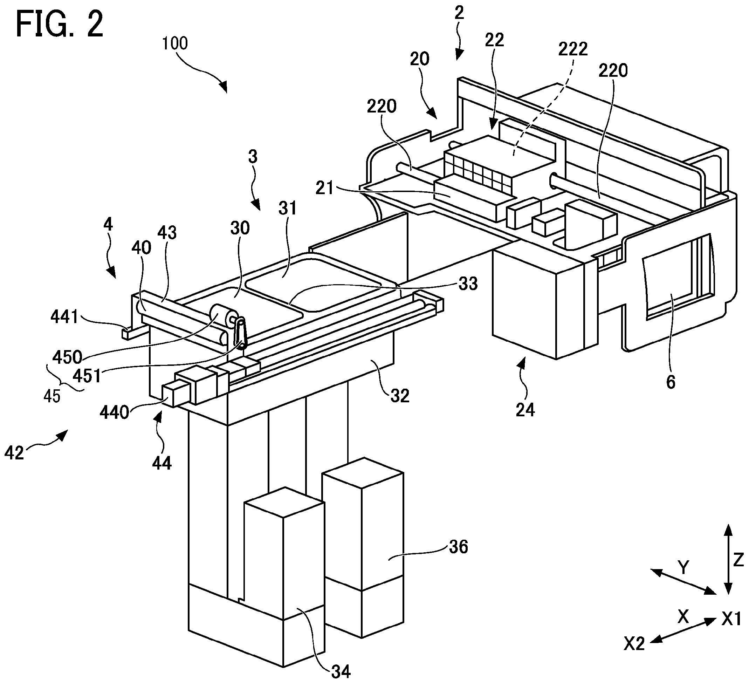

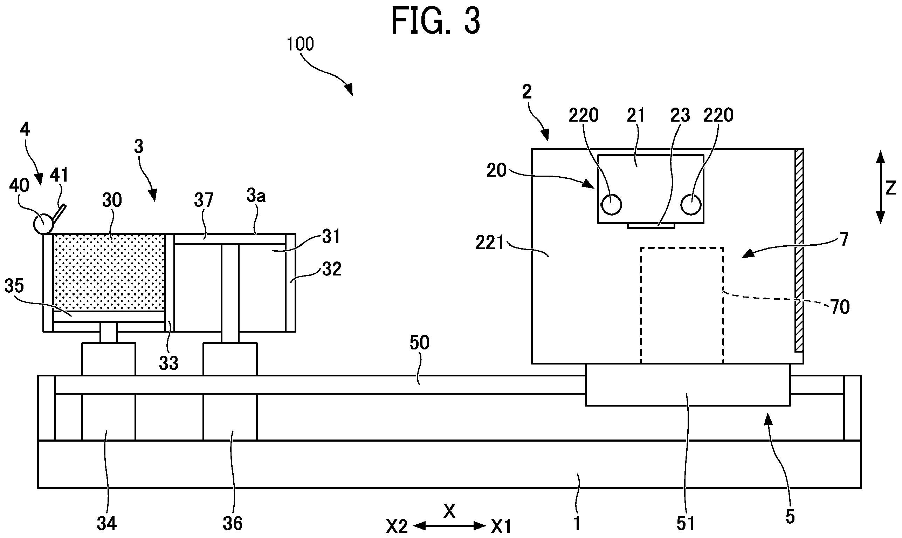

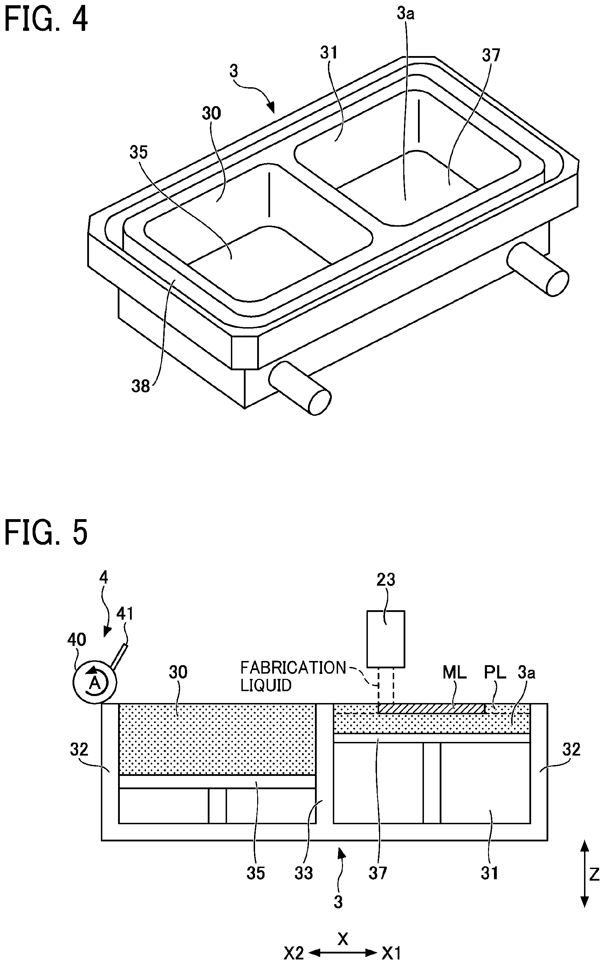

First, a three-dimensional fabrication apparatus 100 is described with reference to FIGS. 1 to 5. FIG. 1 is a schematic plan view of the three-dimensional fabrication apparatus 100. FIG. 2 is a perspective view illustrating a part of the three-dimensional fabrication apparatus 100 during fabrication. FIG. 3 is a schematic side view of the three-dimensional fabrication apparatus 100. FIG. 4 is a perspective view of a fabrication site structure 3. FIG. 5 is a schematic cross-sectional view of the fabrication site structure 3 of the three-dimensional fabrication apparatus 100 during fabrication.

The three-dimensional fabrication apparatus 100 illustrated in FIG. 1 includes at least a base 1, a fabrication unit 2, the fabrication site structure 3, a powder supply unit 4, an X-direction moving mechanism 5, a maintenance mechanism 6, and a Z-direction lifting mechanism 7. FIG. 2 illustrates the fabrication unit 2, the fabrication site structure 3, the powder supply unit 4, and the maintenance mechanism 6 of the three-dimensional fabrication apparatus 100 illustrated in FIG. 1 in detail.

The three-dimensional fabrication apparatus 100 supplies powder to a fabrication site 3a of the fabrication site structure 3 in a thin layer with the powder supply unit 4 to form a powder layer PL (see FIG. 5). Further, the three-dimensional fabrication apparatus 100 discharges fabrication liquid to the powder layer PL with the fabrication unit 2 to form a fabrication layer ML (see FIG. 5) that is the cured powder. Then, the three-dimensional fabrication apparatus 100 repeats the formation of the fabrication layer ML in the fabrication site 3a to deposit multiple fabrication layers ML, thereby completing the desired three-dimensional object.

The "powder layer PL" is a layer of the fabrication material spread in a layer. Powder as the fabrication material is supplied to the fabrication site 3a, and the upper surface of the powder is flattened, thereby spreading the powder in a layer in the fabrication site 3a. The powder layer PL having an appropriate thickness can be formed in accordance with the supply amount of the powder and the size of the fabrication site 3a. An (n+1)-th powder layer PL is deposited on an n-th powder layer PL (including the fabrication layer ML). The "fabrication layer ML" is a cured portion of the layer of the fabrication material (powder layer PL). The fabrication liquid is discharged to the powder layer PL, and an adhesive included in the powder is dissolved. As a result, base materials of the powder are bonded to each other with the adhesive, thereby curing the portion of the powder layer PL. The fabrication layer ML has the same thickness as the powder layer PL. An (n+1)-th fabrication layer ML is also bonded to an n-th fabrication layer ML with the adhesive, thereby forming a layered solid that is continuous in the direction of deposition.

The base 1 has an upper surface on which the fabrication site structure 3 and the fabrication unit 2 can be mounted. The three-dimensional fabrication apparatus 100 includes the X-direction moving mechanism 5 on the upper surface of the base 1. The X-direction moving mechanism 5 moves the entire fabrication unit 2 in the direction indicated by arrow X in FIGS. 1 to 3. The X-direction moving mechanism 5 includes a pair of rails 50 and a pair of sliders 51 that move on the pair of rails 50.

The fabrication unit 2 discharges fabrication liquid. The fabrication unit 2 includes a liquid discharge unit 20 that discharges the fabrication liquid to the powder in the fabrication site structure 3. The liquid discharge unit 20 includes a carriage 21, a scanning structure 22 that moves the carriage 21 in the direction indicated by arrow Y in FIGS. 1 and 2, one or more liquid discharge heads 23 mounted on the carriage 21, and a tank mount 24 that accommodates a plurality of tanks 24t. Fabrication liquids A, B, C, and D are stored in the plurality of tanks 24t, respectively.

The scanning structure 22 includes a pair of guides 220, a pair of side plates 221 that supports both ends of the pair of guides 220, and a Y-direction moving mechanism 222. The Y-direction moving mechanism 222 includes a pulley, a belt, and the like to reciprocate the carriage 21 along the pair of guides 220 extending in the direction indicated by arrow Y (main scanning direction).

Each liquid discharge head 23 includes two nozzle rows in each of which a plurality of nozzles is arranged. The liquid discharge head 23 discharges liquid from the nozzles. Hereinafter, the two liquid discharge heads 23 are also referred to as a first liquid discharge head 23a and a second liquid discharge head 23b. The tank mount 24 supplies the fabrication liquids A, B, C, and D from the corresponding tanks 24t to the first liquid discharge head 23a and the second liquid discharge head 23b via supply tubes or the like. For example, the first liquid discharge head 23a discharges the fabrication liquid A and the fabrication liquid B from the two nozzle rows, and the second liquid discharge head 23b discharges the fabrication liquid C and the fabrication liquid D from the two nozzle rows, respectively. The liquid discharge head 23 is not limited to such a configuration. The fabrication liquids A, B, C, and D may be the same liquid or may be a combination of different liquids.

The fabrication site structure 3 defines the fabrication site 3a on the base 1. A three-dimensional object is formed in the fabrication site 3a. The fabrication site structure 3 is disposed on one side in the direction indicated by arrow X (lower side in FIG. 1) on the upper surface of the base 1. The fabrication site structure 3 has a rectangular shape as viewed in plan view and includes two chambers (a powder storage chamber 30 and a fabrication chamber 31) arranged in the direction indicated by arrow X. In the fabrication site structure 3, a side wall 32 surrounds the powder storage chamber 30 and the fabrication chamber 31, and a partition wall 33 separates the powder storage chamber 30 and the fabrication chamber 31 from each other.

The powder supply unit 4 supplies powder to the fabrication site 3a. The powder supply unit 4 includes a flattening roller 40 serving as a flattening member, a powder removal plate 41, and an operation mechanism 42.

The flattening roller 40 flattens an upper surface of the layers of the fabrication material. The flattening roller 40 is a cylindrical rotator and has an outer circumferential surface that contacts powder in the powder storage chamber 30 and powder in the fabrication chamber 31. The outer circumferential surface of the flattening roller 40 has an appropriate hardness so that the flattening roller 40 does not deform even when pressing the powder. The outer circumferential length (circumference) and diameter of the flattening roller 40 are preferably set to appropriate dimensions in accordance with the length of the fabrication chamber 31 in the direction indicated by arrow X. Further, the length of the flattening roller 40 in the axial direction indicated by arrow Y is longer than the width of the fabrication site structure 3 in the direction indicated by arrow Y.

The powder removal plate 41 has a side edge contacting the circumferential surface of the flattening roller 40 and moves together with the flattening roller 40 to remove powder adhering to the flattening roller 40.

The operation mechanism 42 of the powder supply unit 4 includes a holding frame 43, a horizontal drive unit 44, and a rotation drive unit 45. The holding frame 43 holds the flattening roller 40 and the powder removal plate 41. The horizontal drive unit 44 reciprocates the holding frame 43 in the direction indicated by arrow X (horizontal direction). The rotation drive unit 45 rotates the flattening roller 40. The holding frame 43 extends in the direction indicated by arrow Y and rotatably supports both axial ends of the flattening roller 40.

The horizontal drive unit 44 includes an actuator 440 disposed on one side of the fabrication site structure 3 in the direction indicated by arrow Y and a guide rail 441 disposed on the other side of the fabrication site structure 3 in the direction indicated by arrow Y. A ball screw mechanism, a cylinder mechanism, or the like can be applied to the actuator 440. The actuator 440 includes a stationary portion extending in the direction indicated by arrow X and a movable portion movable relative to the stationary portion in the direction indicated by arrow X. One end of the holding frame 43 in the direction indicated by arrow Y is secured to the movable portion, and the other end of the holding frame 43 in the direction indicated by arrow Y is movably supported on the guide rail 441. The horizontal drive unit 44 reciprocates the flattening roller 40 and the powder removal plate 41 held by the holding frame 43 in the direction indicated by arrow X along with the movement of the movable portion.

The rotation drive unit 45 includes a drive source 450 secured to the holding frame 43 and a drive transmitter 451 disposed between a rotation shaft of the drive source 450 and the flattening roller 40. The drive source 450 is secured to one end of the upper surface of the holding frame 43 in the direction indicated by arrow Y. The drive transmitter 451 includes a plurality of gears, a plurality of pulleys, and a belt, and transmits a rotational driving force of the drive source 450 to the flattening roller 40.

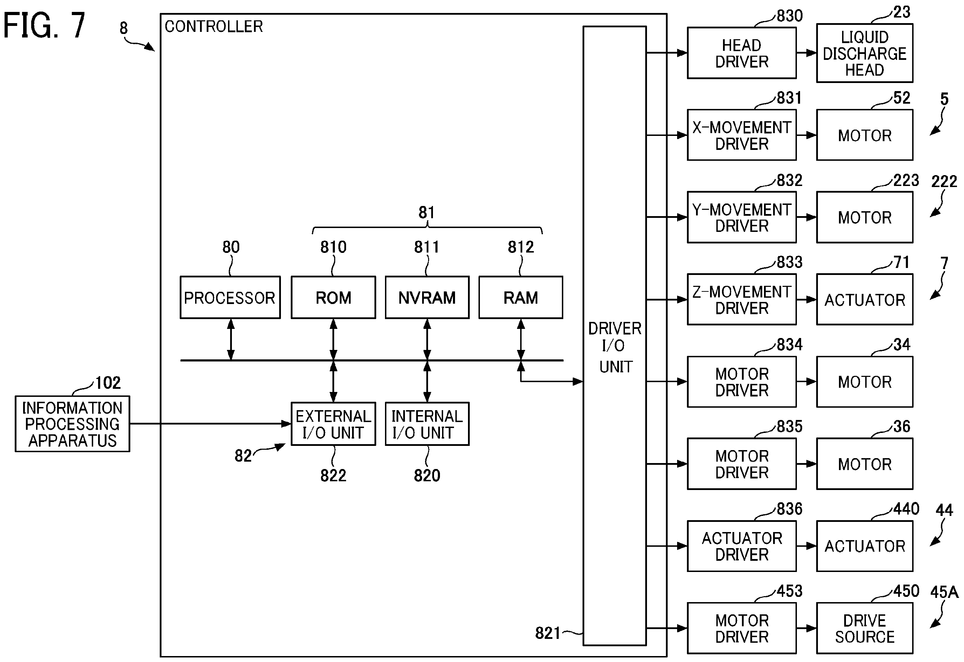

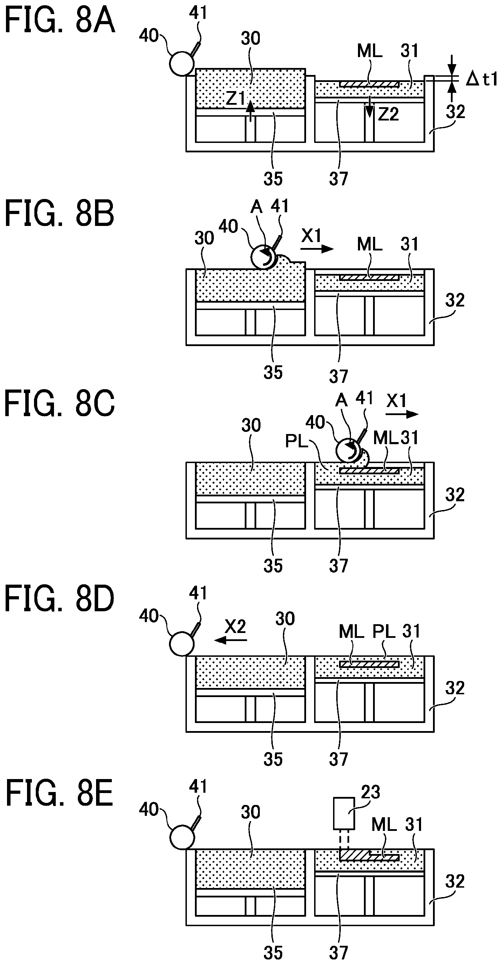

The rotation drive unit 45 has a positioning function of determining the circumferential position of the flattening roller 40 while rotating the flattening roller 40. The positioning function of the rotation drive unit 45 is to rotate the flattening roller 40 in response to command data (e.g., a designated amount of rotation) from a controller 8 (see FIGS. 7, 8, and the like).

The maintenance mechanism 6 maintains and recovers the liquid discharge head 23. The maintenance mechanism 6 includes a cap 60 that sucks the fabrication liquid from the nozzles of the liquid discharge head 23 and a wiper 61 that wipes a nozzle surface, on which the plurality of nozzles is arranged, of the liquid discharge head 23.

The Z-direction lifting mechanism 7 displaces the liquid discharge unit 20 in the direction indicated by arrow Z. FIG. 3 is a schematic side view of the three-dimensional fabrication apparatus 100. Description of the components or portions described with reference to FIGS. 1 and 2 is omitted as appropriate. The Z-direction lifting mechanism 7 includes the pair of side plates 221 of the scanning structure 22 and a pair of lifting guides 70. Each side plate 221 is movably attached to the corresponding lifting guide 70, and the lifting guide 70 is secured to the slider 51 of the X-direction moving mechanism 5. The Z-direction lifting mechanism 7 moves the pair of side plates 221 up and down along the pair of lifting guides 70 extending in the direction indicated by arrow Z. Accordingly, the liquid discharge unit 20 supported by the pair of side plates 221 and the pair of guides 220 are also displaced in the direction indicated by arrow Z.

The powder storage chamber 30 of the fabrication site structure 3 has an open-topped box shape having an appropriate depth to store powder to be supplied to the fabrication chamber 31. The powder storage chamber 30 includes a supply stage 35 at the bottom. The supply stage 35 moves up and down in the vertical direction, which is the height direction indicated by arrow Z, by a motor 34. The top of the powder in the powder storage chamber 30 is displaced as the supply stage 35 moves up and down. The upper surface of the supply stage 35 is along an X-Y plane (horizontal plane) perpendicular to the vertical direction. The peripheral edge of the supply stage 35 slidingly contacts the inner surface of the powder storage chamber 30 when the supply stage 35 is displaced.

Similarly to the powder storage chamber 30, the fabrication chamber 31 has an open-topped box shape having an appropriate depth to form a three-dimensional object. The fabrication chamber 31 includes a fabrication stage 37 at the bottom. The fabrication stage 37 moves up and down in the vertical direction by a motor 36 to define the fabrication site 3a, on the upper surface of which the three-dimensional object is fabricated. The fabrication site 3a is horizontal. The fabrication stage 37 slidingly contacts the inner surface of the fabrication chamber 31 when the fabrication stage 37 is displaced.

FIG. 4 is a perspective view of the fabrication site structure 3. Description of the components or portions described with reference to FIGS. 1 to 3 is omitted as appropriate. The fabrication site structure 3 has a recessed groove 38 having an open upper surface around the powder storage chamber 30 and the fabrication chamber 31. When the powder layer PL is formed, powder falls out of the powder storage chamber 30 and the fabrication chamber 31 and is accumulated in the recessed groove 38. The powder accumulated in the recessed groove 38 is collected by a powder collection device and returned to the powder storage chamber 30.

FIG. 5 is a schematic cross-sectional view of the fabrication site structure 3 of the three-dimensional fabrication apparatus 100 during fabrication. Description of the components or portions described with reference to FIGS. 1 to 4 is omitted as appropriate. The powder supply unit 4 pushes out powder in the powder storage chamber 30 to the fabrication chamber 31 and moves on the powder layer PL so as to flatten the surface of the powder. As a result, the powder layer PL is formed in the fabrication chamber 31. The operation mechanism 42 of the powder supply unit 4 moves the flattening roller 40 in the direction indicated by arrow X while rotating the flattening roller 40.

As the operation mechanism 42 transmits the rotational driving force to the flattening roller 40, the flattening roller 40 rotates in the direction indicated by arrow A (i.e., counterclockwise in FIG. 5). That is, a lower portion of the flattening roller 40 that contacts powder moves forward in the movement direction of the flattening roller 40 moving from the powder storage chamber 30 toward the fabrication chamber 31 in the direction indicated by arrow X1. Accordingly, the flattening roller 40 pushes out powder in the powder storage chamber 30 in the direction indicated by arrow X1 while kicking up the powder, and flattens the powder pushed out in the fabrication chamber 31.

The above-described configuration is a common configuration of the three-dimensional fabrication apparatuses 100 according to embodiments of the present disclosure. Each of the three-dimensional fabrication apparatuses 100 according to first to fourth embodiments has a different configuration of the rotation drive unit 45 and the controller 8. Hereinafter, suffixes A to D are attached to reference numerals of the rotation drive units 45 according to the first to fourth embodiments, respectively, and the configurations of the respective embodiments are described.

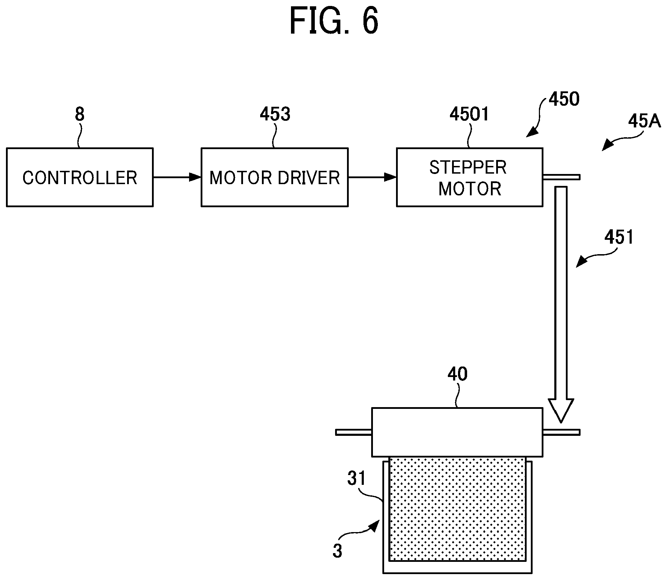

FIG. 6 is a block diagram illustrating a configuration of a rotation drive unit 45A and the controller 8 according to the first embodiment of the present disclosure. As illustrated in FIG. 6, the rotation drive unit 45A includes a stepper motor 4501 as the drive source 450. The three-dimensional fabrication apparatus 100 includes a motor driver 453 between the controller 8 and the stepper motor 4501.

Specifically, the controller 8 outputs a pulse signal to the motor driver 453. The pulse signal has a duty ratio corresponding to the designated amount of rotation, which is command data of the stepper motor 4501. The motor driver 453 converts electric power of a power supply unit into a pulse form based on the pulse signal, and outputs the electric power in the pulse form (electric power pulse) to the stepper motor 4501.

The stepper motor 4501 rotates by a predetermined step angle based on the electric power pulse received from the motor driver 453. That is, the step angle is proportional to the number of pulses (frequency) of the pulse signal from the controller 8. Accordingly, the stepper motor 4501 rotates the rotation shaft thereof by a rotational phase (angle or number of rotations) corresponding to the amount of rotation designated by the controller 8.

The stepper motor 4501 may lose steps due to overload or rapid speed change, that is, loss of synchronization in which the rotation of motor is not synchronized with the pulse signal. Preferably, the stepper motor 4501 is rotatable with twice or more torque for rotating of the flattening roller 40 so as to prevent the loss of synchronization. Alternatively, the controller 8 may change the duty ratio of the pulse signal when accelerating and decelerating the rotation shaft so as to avoid the loss of synchronization due to rapid acceleration or deceleration. If the step angle of the stepper motor 4501 is large (i.e., low resolution), the step angle may be reduced (the resolution is increased) to avoid the loss of synchronization.

FIG. 7 is a block diagram of the controller 8 of the three-dimensional fabrication apparatus 100. As illustrated in FIG. 7, the controller 8 of the three-dimensional fabrication apparatus 100 includes one or more processors 80, a memory 81, an input-and-output interface 82, and an electronic circuit. The one or more processors 80 has a configuration combining at least one of a central processing unit (CPU), an application-specific integrated circuit (ASIC), a field programmable gate array (FPGA), or a circuit including a plurality of discrete semiconductors to execute a program stored in the memory 81. The memory 81 includes nonvolatile memories, such as a read only memory (ROM) 810 and a non-volatile random access memory (NVRAM) 811, and a volatile memory, such as a random access memory (RAM) 812, and serves as a storage unit of the controller 8. A part of the memory 81 may be included in the one or more processors 80.

The input-and-output interface 82 includes an internal input-and-output (I/O) unit 820 and a driver I/O unit 821. The internal I/O unit communicates with internal components (e.g., a touch panel, various sensors, and the like) of the three-dimensional fabrication apparatus 100. The driver I/O unit 821 is connected to various drivers. The input-and-output interface 82 further includes an external I/O unit 822 that communicates with an external device (e.g., an information processing apparatus 102 such as a personal computer that can transmit fabrication data). The information processing apparatus 102 processes a stereoscopic image input (created or acquired) by a user, generates fabrication data obtained by slicing a desired three-dimensional object into a plurality of fabrication layers ML, and transmits the fabrication data to the controller 8.

The three-dimensional fabrication apparatus 100 includes the various drivers connected to the controller 8 (processor 80). Each driver supplies electric power to a motor, an actuator, or the like of each mechanism of the three-dimensional fabrication apparatus 100 based on a command from the processor 80. Each driver may be mounted on the same board on which the processor 80, the memory 81, the input-and-output interface 82, and the like are mounted, or may be separated from the board in the three-dimensional fabrication apparatus 100. The various drivers include, for example, a head driver 830, an X-movement driver 831, a Y-movement driver 832, a Z-movement driver 833, a motor driver 834, a motor driver 835, an actuator driver 836, and the motor driver 453. The head driver 830 causes the liquid discharge head 23 to discharge fabrication liquid. The X-movement driver 831 drives a motor 52 of the X-direction moving mechanism 5 (see FIG. 1). The Y-movement driver 832 drives a motor 223 of the Y-direction moving mechanism 222 (see FIG. 1). The Z-movement driver 833 drives an actuator 71 of the Z-direction lifting mechanism 7 (see FIGS. 1 and 3). The motor driver 834 drives the motor 34 that moves the supply stage 35 up and down (see FIGS. 2 and 3). The motor driver 835 drives the motor 36 that moves the fabrication stage 37 up and down (see FIGS. 2 and 3). The actuator driver 836 drives the actuator 440 of the horizontal drive unit 44 (see FIG. 2). The motor driver 453 drives the drive source 450 of the rotation drive unit 45 (see FIG. 2).

The processor 80 executes a program stored in the memory 81 to control the overall operation of the three-dimensional fabrication apparatus 100. In particular, when the rotation drive unit 45A rotates the flattening roller 40 and the horizontal drive unit 44 moves the flattening roller 40 in the direction indicated by arrow X, the processor 80 controls the rotational phase of the stepper motor 4501 to determine the circumferential position of the flattening roller 40.

Next, an operation of the three-dimensional fabrication apparatus 100 is described with reference to FIGS. 8A to 8E. First, a description is given of the operation when the three-dimensional fabrication apparatus 100 forms one layer, which is an (n+1)-th layer, of the fabrication layer ML. FIGS. 8A to 8E are schematic views illustrating the operation of the three-dimensional fabrication apparatus 100 when forming the fabrication layer ML. In FIG. 8A, a fabrication layer ML, which is an n-th layer, has already been formed on the fabrication stage 37 of the fabrication chamber 31. The same operation is performed even when a first fabrication layer ML is formed.

As illustrated in FIG. 8A, first, the controller 8 performs a powder height adjustment step in which the supply stage 35 of the powder storage chamber 30 is lifted in the direction indicated by arrow Z1 and the fabrication stage 37 of the fabrication chamber 31 is lowered in the direction indicated by arrow Z2. At this time, the controller 8 adjusts a distance by which the fabrication stage 37 is lowered so that a clearance Δt1 between the lower end (i.e., the surface that contacts powder) of the flattening roller 40 and upper surface of powder matches the thickness of the fabrication layer ML to be formed. The clearance Δt1 is preferably in a range of about several tens to 100 µm. In the powder height adjustment step, the controller 8 sets the flattening roller 40 at a start position that is a predetermined distance away from the fabrication site 3a in the direction indicated by arrow X, and the flattening roller 40 is on standby at the start position without rotating.

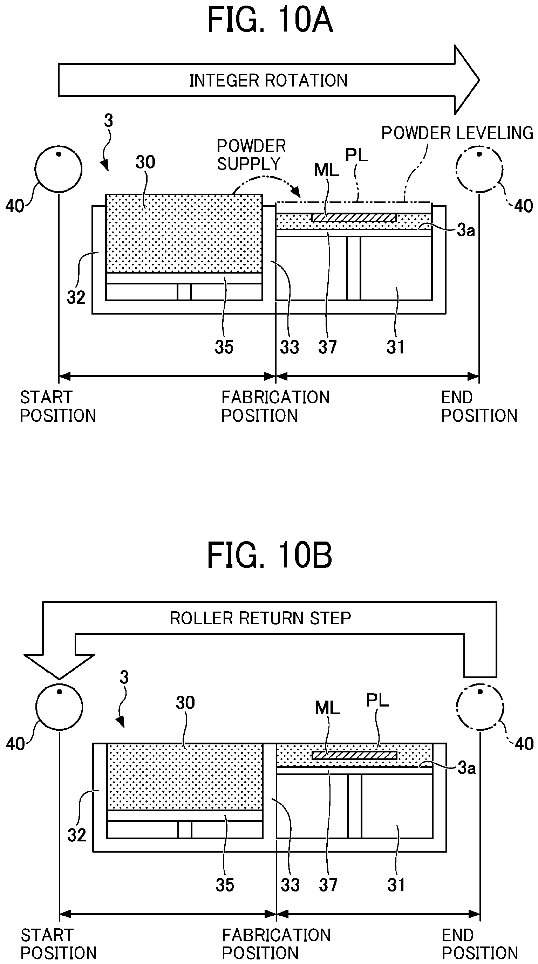

Next, as illustrated in FIG. 8B, the controller 8 performs a powder transfer step in which the flattening roller 40 moves toward the fabrication chamber 31 in the direction indicated by arrow X1 while rotating in the direction indicated by arrow A on the powder storage chamber 30. At this time, the controller 8 adjusts (determines) the circumferential position of the flattening roller 40 with respect to the position where the flattening roller 40 moves in the direction indicated by arrow X in conjunction with the movement amount of the flattening roller 40 in the direction indicated by arrow X1 and the rotational phase of the stepper motor 4501. In the powder transfer step, as the supply stage 35 is lifted, powder is exposed above the open upper surface of the powder storage chamber 30. The flattening roller 40 pushes out the exposed powder in the direction indicated by arrow XI, thereby transfer the powder from the powder storage chamber 30 to the fabrication chamber 31. When the flattening roller 40 reaches the partition wall 33 of the fabrication site structure 3 (see also the fabrication position in FIG. 10A), the controller 8 moves the flattening roller 40 from the powder storage chamber 30 to the fabrication chamber 31.

Then, as illustrated in FIG. 8C, the controller 8 performs a flattening step in which the flattening roller 40 moves on the fabrication chamber 31 in the direction indicated by arrow X1 while rotating in the direction indicated by arrow A. Also at this time, the controller 8 adjusts (determines) the circumferential position of the flattening roller 40 with respect to the position where the flattening roller 40 moves in the direction indicated by arrow X in conjunction with the movement amount of the flattening roller 40 in the direction indicated by arrow X1 and the rotational phase of the stepper motor 4501. As the flattening roller 40 passes through the powder supplied from the powder storage chamber 30, the surface of the powder in the fabrication chamber 31 is flatten. When the flattening roller 40 reaches the end position outside the fabrication chamber 31, the controller 8 stops the rotation of the stepper motor 4501. In the flattening step, the three-dimensional fabrication apparatus 100 flattens the surface of the powder so that the surface of the powder is parallel (horizontal) to the upper surface of the fabrication stage 37, thereby forming the powder layer PL.

After the powder layer PL is formed, as illustrated in FIG. 8D, the controller 8 performs a roller return step in which the flattening roller 40 moves from the end position to the start position in the direction indicated by arrow X2. In the roller return step, the three-dimensional fabrication apparatus 100 preferably displaces the flattening roller 40 or the fabrication site 3a in the direction indicated by arrow Z so that the flattening roller 40 does not contact the fabrication site structure 3 (powder layer PL). After the roller return step, the powder layer PL having the thickness equal to the clearance Δt1 is formed on the fabrication layer ML on the fabrication stage 37.

Thereafter, as illustrated in FIG. 8E, the controller 8 performs a fabrication liquid discharge step in which the fabrication unit 2 discharges droplets of the fabrication liquid from the liquid discharge head 23 to a target position of the powder layer PL, thereby forming the fabrication layer ML in the powder layer PL. The fabrication liquid discharged from the liquid discharge head 23 dissolves the adhesive coating over the base material of the powder. In the powder layer PL, the base materials of the powder are bonded to each other, and the powder layer PL is also bonded to the fabrication layer ML below the powder layer PL with the dissolved adhesive, thereby forming the cured fabrication layer ML at the region to which the fabrication liquid is discharged.

The controller 8 of the three-dimensional fabrication apparatus 100 repeats the above-described steps illustrated in FIGS. 8A to 8E a desired number of times to complete the three-dimensional object.

Here, the flattening roller 40 may have runout of an outer circumferential surface thereof, which contacts powder, when rotating. When the flattening roller 40 moves on the fabrication site 3a, the runout of the flattening roller 40 may causes the surface of the powder layer PL not to be completely flatten after the flattening roller 40 passes through. As a result, the surface of the powder layer PL may have cyclic unevenness. Therefore, when an n-th powder layer PL1 and an (n+1)-th powder layer PL2 are formed, the three-dimensional fabrication apparatus 100 performs a rotational phase matching control in which the circumferential positions of the flattening roller 40 with respect to the position where the flattening roller 40 moves match each other in the flattening steps of the n-th powder layer PL1 and the (n+1)-th powder layer PL2.

In general, when the rotational phase is controlled, a sensor (for example, a rotary encoder) that detects the circumferential position (rotation angle) of the flattening member is externally attached to the flattening member. The sensor detects the circumferential position of the flattening member that is rotating to control the rotational phase of the drive source. However, when the fabrication material such as powder adheres to the external sensor, detection accuracy of the external sensor may decrease, or a failure of the external sensor may occur. As a result, it is difficult to accurately control the rotational phase. On the other hand, according to the embodiments of the present disclosure, the three-dimensional fabrication apparatus 100 can control the rotational phase with high accuracy by the rotational phase matching control.

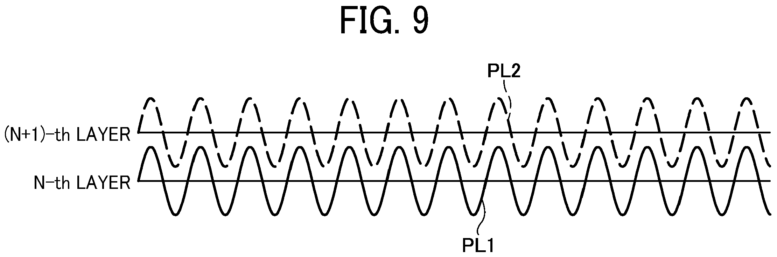

FIG. 9 is a schematic diagram illustrating a state in which the n-th powder layer PL1 and the (n+1)-th powder layer PL2 are formed by the rotational phase matching control. When the n-th powder layer PL1 is formed, the controller 8 relates the movement amount of the flattening roller 40 from the start position in the direction indicated by arrow X1 by the horizontal drive unit 44 to the rotational phase of the stepper motor 4501 (i.e., the circumferential position of the flattening roller 40). As a result, the surface of the n-th powder layer PL1 has the cyclic unevenness depicted by solid line in FIG. 9.

Similarly, when the (n+1)-th powder layer PL2 is formed, the controller 8 relates the movement amount of the flattening roller 40 from the start position in the direction indicated by arrow X1 by the horizontal drive unit 44 to the rotational phase of the stepper motor 4501 (i.e., the circumferential position of the flattening roller 40). As a result, the (n+1)-th powder layer PL2 is formed on the n-th powder layer PL1 to which the fabrication liquid is discharged to form the fabrication layer ML. At this time, the surface of the (n+1)-th powder layer PL2 has the same cyclic unevenness as the n-th powder layer PL1 as depicted by broken line in FIG. 9. Thus, the cycle of the unevenness of the n-th powder layer PL1 is the same as the cycle of the unevenness of the (n+1)-th powder layer PL2, thereby preventing the flattening roller 40 from interfering with the fabrication layer ML cured in the n-th layer.

When the rotational phase matching control is performed, the circumferential position of the flattening roller 40 is identical at the start position of both the n-th layer and the (n+1)-th layer in the flattening step. That is, the controller 8 and the rotation drive unit 45A control the rotational phase (rotation angle, number of rotations) of the stepper motor 4501 to adjust the circumferential position of the flattening roller 40 so as to match the circumferential positions each other in multiple layers before the start of the flattening step.

FIGS. 10A and 10B are schematic view illustrating operations of the three-dimensional fabrication apparatus 100 when determining the circumferential position of the flattening roller 40. FIG. 10A illustrates the operation when the n-th powder layer PL is formed. FIG. 10B illustrates the operation when the circumferential position of the flattening roller 40 is determined at the start position of the (n+1)-th layer.

Specifically, the controller 8 causes the rotation drive unit 45A to rotate the flattening roller 40 the number of times indicated by an integer (in other words, integer number of times) after the flattening roller 40 starts moving from the start position to flatten the n-th layer and before the flattening roller 40 starts moving from the start position to flatten the (n+1)-th layer (hereinafter referred to as a roller rotation period). The roller rotation period includes the flattening step and the roller return step. In the flattening step, the flattening roller 40 moves from the start position outside the fabrication site structure 3 to the fabrication position, transfers powder from the powder storage chamber 30 to the fabrication chamber 31, flattens the powder in the fabrication chamber 31, and reaches the end position. In the roller return step, the flattening roller 40 returns to the start position after the flattening step.

That is, the controller 8 adjusts the pulse signal output to the motor driver 453 so that the rotation shaft of the stepper motor 4501 rotates just an integer number of times in the roller rotation period. For example, when the number of pulses of the pulse signal for rotating the rotation shaft of the stepper motor 4501 one rotation (rotate 360 degrees) is 360, the controller 8 outputs a pulse signal having the multiple of 360 pulses in the roller rotation period. As a result, after the roller rotation period ends, the flattening roller 40 having the same circumferential position as the n-th layer is on standby at the start position of the (n+1)-th layer. In FIGS. 10A and 10B, to facilitate understanding the circumferential position of the flattening roller 40, black circles are depicted at predetermined positions for convenience.

The controller 8 may monitor the position where the flattening roller 40 (stepper motor 4501) moves in the direction indicated by arrow X and change the duty ratio of the pulse signal to change the rotation speed of the flattening roller 40. For example, preferably, the controller 8 gradually decreases the rotation speed at the start of rotation and/or at the end of rotation of the flattening roller 40 to accurately adjust the integer number of rotations of the flattening roller 40. Alternatively, the controller 8 may change the rotation speed of the flattening roller 40 when the flattening roller 40 pushes out the powder in the powder storage chamber 30 and when the flattening roller 40 flattens the powder in the fabrication chamber 31.

The timing at which the flattening roller 40 (stepper motor 4501) rotates an integer number of times is not particularly limited, and may be arbitrarily designed. For example, the three-dimensional fabrication apparatus 100 may rotate the flattening roller 40 an integer number of times in the flattening step in which the flattening roller 40 moves from the start position to the end position, and return the flattening roller 40 to the start position while keeping the rotational position stopped at the end position. Alternatively, for example, the three-dimensional fabrication apparatus 100 may rotate the flattening roller 40 an integer number of times in the entire flattening step and roller return step.

The above-described control facilitates the controller 8 accurately matching the circumferential positions of the flattening roller 40 each other between the start position of the n-th layer and the start position of the (n+1)-th layer. Therefore, the controller 8 can reliably match the unevenness of the n-th powder layer PL1 and the unevenness of the (n+1)-th powder layer PL2 by the rotational phase matching control in the flattening step. Thus, the flattening roller 40 is prevented from interfering with the fabrication layer ML cured in the n-th layer.

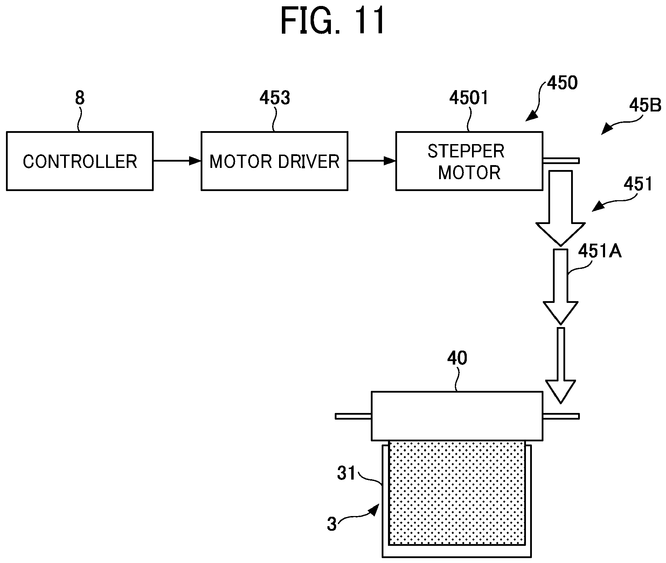

FIG. 11 is a block diagram illustrating a configuration of a rotation drive unit 45B and the controller 8 according to the second embodiment of the present disclosure. As illustrated in FIG. 11, the rotation drive unit 45B includes a decelerator 451A as the drive transmitter 451 that transmits the rotational driving force from the drive source 450 (the stepper motor 4501) to the flattening roller 40. The decelerator 451A reduces the rotation speed of the drive source 450 by a predetermined speed reduction ratio. The speed reduction ratio of the decelerator 451A is set to a value with finite decimal such as 1/2, 1/4, or 1/5 per one rotation of the drive source 450.

In this case, the controller 8 rotates the drive source 450 (the stepper motor 4501) in consideration of the speed reduction ratio of the decelerator 451A of the rotation drive unit 45B to rotate the flattening roller 40 an integer number of times. For example, the number of pulses of the pulse signal is 360 when the rotation shaft of the stepper motor 4501 makes one rotation and the speed reduction ratio of the decelerator 451A is 1/2, the controller 8 outputs a pulse signal having the multiple of 720 pulses that is twice 360.

As described above, even in the configuration in which the drive transmitter 451 includes the decelerator 451A, the three-dimensional fabrication apparatus 100 can reliably determine the circumferential position of the flattening roller 40. In addition, the three-dimensional fabrication apparatus 100 decelerates the rotation of the drive source 450 with the decelerator 451A to reliably adjust the rotation speed of the flattening roller 40 to be slow. Thus, the flattening roller 40 can be prevented from kicking up powder.

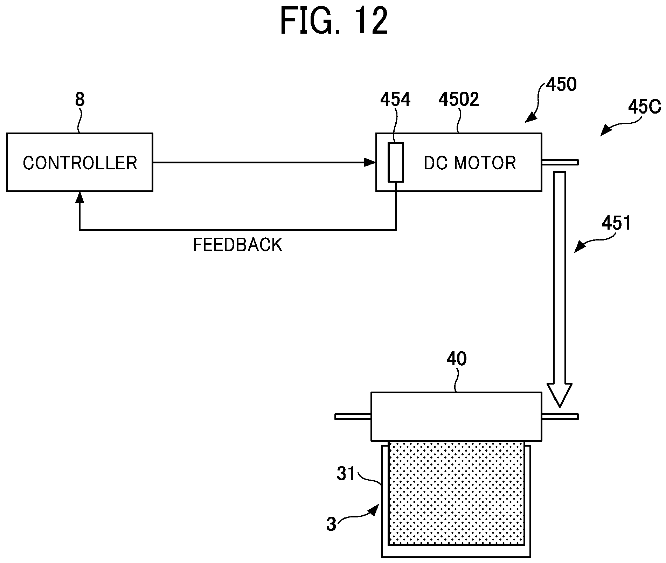

FIG. 12 is a block diagram illustrating a configuration of a rotation drive unit 45C and the controller 8 according to the third embodiment of the present disclosure. As illustrated in FIG. 12, the rotation drive unit 45C includes a direct current (DC) motor 4502 driven by DC power as the drive source 450. For example, a brushless DC motor including a built-in sensor 454 such as a hall element can be applied to the DC motor 4502 having the positioning function of the rotation drive unit 45C.

In the rotation drive unit 45C, the DC motor 4502 is connected to the controller 8 including a motor driver that can output DC power to the DC motor 4502. The controller 8 recognizes the rotational phase (rotation angle or number of rotations) of the rotation shaft of the DC motor 4502 by feedback of the position of a rotor of the DC motor 4502 detected by the built-in sensor 454. Based on the recognized rotational phase, the controller 8 switches a stator (coil) of the DC motor 4502 to control the rotational phase of the rotation shaft of the DC motor 4502.

That is, the rotation drive unit 45C has the positioning function of transmitting data of the rotational phase of the drive source 450 to the controller 8 and rotating the drive source 450 by a designated amount in response to command data (designation) from the controller 8. Accordingly, even in the three-dimensional fabrication apparatus 100 including the DC motor 4502, the circumferential position of the flattening roller 40 can be identical for each of the multiple layers at the start position of the flattening step. In addition, since the DC motor 4502 is disposed at a position above and away from the flattening roller 40 (e.g., on the upper surface of the holding frame 43), even when the flattening roller 40 rotates, such a position of the DC motor 4502 prevents powder and fabrication liquid from entering the built-in sensor 454. Therefore, in the three-dimensional fabrication apparatus 100, a failure of the built-in sensor 454 due to the powder, the fabrication liquid, or the like is avoided, and the reliability of rotation control is improved.

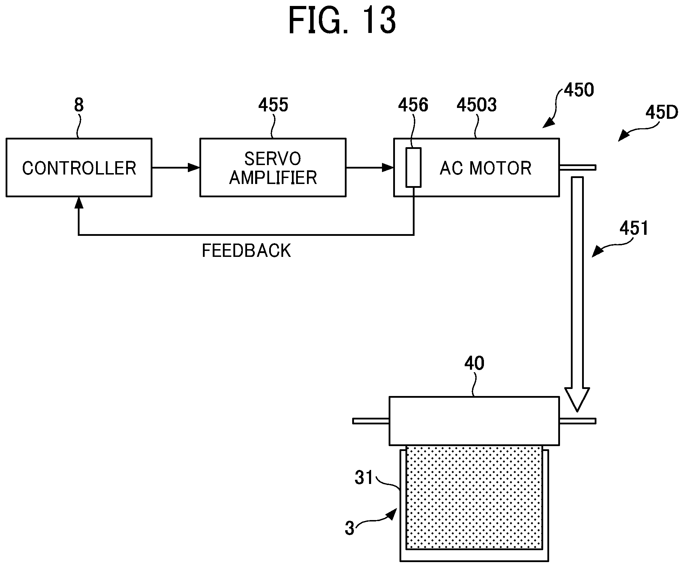

FIG. 13 is a block diagram illustrating a configuration of a rotation drive unit 45D and the controller 8 according to the fourth embodiment of the present disclosure. As illustrated in FIG. 13, the rotation drive unit 45D includes an alternating current (AC) motor 4503 (AC servo motor) driven by AC power as the drive source 450. For example, an AC brushless motor including a built-in sensor 456 that detects the position of a rotor of the AC motor 4503 can be applied to the AC motor 4503. The built-in sensor 456 is, for example, a rotary encoder.

In addition, the rotation drive unit 45D includes a servo amplifier 455 between the controller 8 and the AC motor 4503 to control the rotational phase of the AC motor 4503. As the servo amplifier 455 receives command data (instruction for the rotational position) from the controller 8 as a servo controller, the servo amplifier 455 outputs AC power corresponding to the command data to the AC motor 4503. The controller 8 controls the rotational phase of the rotation shaft of the AC motor 4503 based on feedback of the position of the rotor detected by the built-in sensor 456.

That is, the rotation drive unit 45D also has the positioning function of transmitting data of the rotational phase of the drive source 450 to the controller 8 and rotating the drive source 450 by a designated amount in response to the command data (designation) from the controller 8. Accordingly, the controller 8 can reliably align the circumferential position of the flattening roller 40 at the start position of the flattening step. In addition, since the AC motor 4503 is disposed at a position above and away from the flattening roller 40 (e.g., on the upper surface of the holding frame 43), even when the flattening roller 40 rotates, such a position of the AC motor 4503 prevents powder and fabrication liquid from entering the built-in sensor 456.

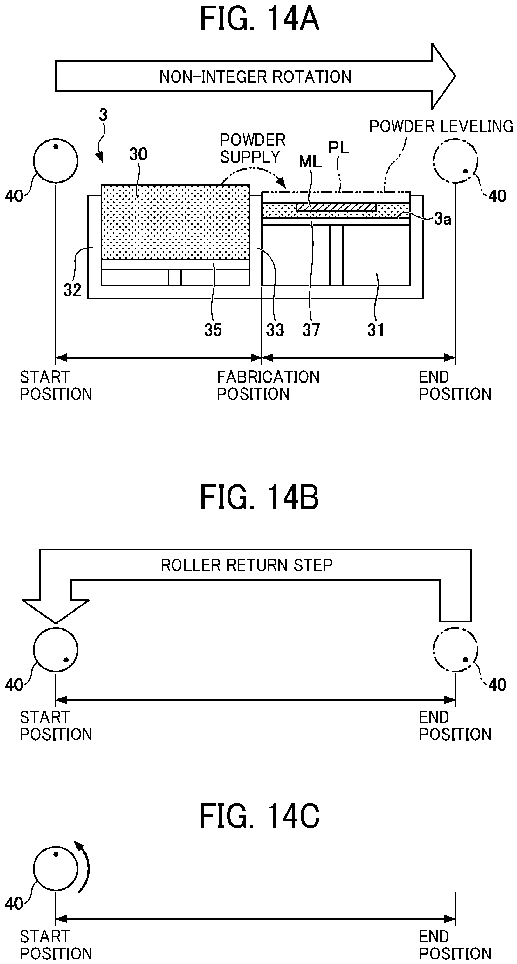

FIGS. 14A to 14C are schematic views illustrating an operation of the three-dimensional fabrication apparatus 100 when determining the circumferential position of the flattening roller 40 according to a variation of the first to fourth embodiments. As illustrated in FIGS. 14A to 14C, the controller 8 of the three-dimensional fabrication apparatus 100 may perform a correction rotation operation for matching the circumferential position of the flattening roller 40 at the start position, separated from the flattening step. For example, the density or the like of the powder may be affected when the flattening roller 40 rotates an integer number of times in the flattening step. In such a case, the flattening roller 40 rotates a non-integer number of times in the flattening step, and the correction rotation operation is performed after the flattening step.

In the correction rotation operation, the controller 8 recognizes the rotational phase (rotation angle when rotating the non-integer number of times) of the rotation shaft of the drive source 450 after the flattening step, and calculates the designated amount of rotation of the flattening roller 40 based on the recognized rotational phase. Then, the controller 8 outputs the calculated designated amount of rotation to the drive source 450 to rotate the flattening roller 40 on standby at the start position. As a result, the flattening roller 40 rotates by an appropriate rotation angle at the start position to align (correct) the circumferential position thereof. Even when the stepper motor 4501 is applied as the drive source 450 as described in the first and second embodiments, the controller 8 monitors the number of pulses of the pulse signal output to the motor driver 453, thereby recognizing the rotational phase of the drive source 450.

The timing of the correction rotation operation is not particularly limited as long as the correction rotation operation is performed after the flattening roller 40 finishes flattening the n-th layer and before the flattening roller 40 starts moving from the start position to flatten the (n+1)-th layer. Preferably, the controller 8 performs the correction rotation operation in the fabrication liquid discharge step (i.e., while the fabrication unit 2 discharges droplets of the fabrication liquid to cure powder). Accordingly, the three-dimensional fabrication apparatus 100 can align (correct) the circumferential position of the flattening roller 40 without a time loss in the entire fabrication process of the three-dimensional object.

Although some embodiments of the present disclosure have been described above, embodiments of the present disclosure are not limited to the above-described embodiments specifically disclosed, and various modifications and changes can be made without departing from the scope of the appended claims.

For example, the three-dimensional fabrication apparatus 100 may include only the fabrication chamber 31 without the powder storage chamber 30 in the fabrication site structure 3, and may include a powder supply mechanism that supplies (drops) powder to the fabrication chamber 31. Even in this case, after powder is supplied to the fabrication chamber 31, the flattening roller 40 can flatten the powder. At this time, the three-dimensional fabrication apparatus 100 can determine the circumferential position of the flattening roller 40.

As described above, the three-dimensional fabrication apparatus 100 has the configuration in which the rotation drive unit 45 has the positioning function of determining the circumferential position of the flattening roller 40 to align the circumferential position of the flattening roller 40 at the start position without an external sensor. Accordingly, without the external sensor which may deteriorate in detection accuracy or fail to detect, the three-dimensional fabrication apparatus 100 can significantly increase the reliability of the rotation control of the flattening roller 40 when flattening the surface of the powder layer PL (layers of the fabrication material).

The three-dimensional fabrication apparatus 100 further includes the controller 8 that controls an operation of the rotation drive unit 45. The controller 8 outputs, while the flattening roller 40 moves on the powder layer PL, command data corresponding to the position where the flattening roller 40 moves, to the rotation drive unit 45, thereby controlling the rotational phase of the rotation drive unit 45. Accordingly, the three-dimensional fabrication apparatus 100 can more accurately adjust (determine) the circumferential position of the flattening roller 40.

In addition, the controller 8 controls the rotation drive unit 45 to have an identical rotational phase in both of when the flattening roller 40 moves on the n-th powder layer PL and when the flattening roller 40 moves on the (n+1)-th powder layer PL. Accordingly, the three-dimensional fabrication apparatus 100 can reliably prevent the flattening roller 40 from interfering with the n-th fabrication layer ML previously formed when the flattening roller 40 flattens the surface of the powder.

In addition, the controller 8 controls the rotation drive unit 45 to rotate the flattening roller 40 an integer number of times after the flattening roller 40 starts moving from the start position to flatten the n-th layer and before the flattening roller 40 starts moving from the start position to flatten the (n+1)-th layer. Thus, the three-dimensional fabrication apparatus 100 can surely determine the circumferential position of the flattening roller 40 at the start position.

In addition, the controller 8 controls the rotation drive unit 45 to rotate the flattening roller 40 to correct the circumferential position of the flattening roller 40 (i.e., the correction rotation operation) after the flattening roller 40 finished flattening the n-th layer and before the flattening roller 40 starts moving from the start position to flatten the (n+1)-th powder layer. Even if the circumferential position of the flattening roller 40 changes while the flattening roller 40 moves on the n-th layer, the three-dimensional fabrication apparatus 100 can stably determine (correct) the circumferential position of the flattening roller 40 at the start position by the correction rotation operation.

The three-dimensional fabrication apparatus 100 further includes the fabrication unit 2 that cures the powder layer PL. The controller 8 controls the rotation drive unit 45 to rotate the flattening roller 40 at the start position to correct the circumferential position of the flattening roller 40 while the fabrication unit 2 cures the layers of the fabrication material. Accordingly, the three-dimensional fabrication apparatus 100 can immediately start flattening the powder of the (n+1)-th layer with the flattening roller 40, thereby increasing the efficiency of fabricating the three-dimensional object as a whole.

The rotation drive unit 45 includes the drive source 450 and the drive transmitter 451 that transmits the rotational driving force of the drive source 450 to the flattening roller 45, and reduces the rotation speed of the drive source 450 based on a speed reduction ratio. The controller 8 controls the rotation drive unit 45 to rotate the flattening roller 40 an integer number of times based on the speed reduction ratio of the drive transmitter 451 after the flattening roller 40 starts moving from the start position to flatten the n-th layer and before the flattening roller 40 starts moving from the start position to flatten the (n+1)-th layer. Even in this case, the three-dimensional fabrication apparatus 100 can accurately determine the circumferential position of the flattening roller 40 at the start position.

The rotation drive unit 45 includes the drive source 450 selected from the group consisting of the stepper motor 4501, the DC motor 4502, and the AC motor 4503. Accordingly, the three-dimensional fabrication apparatus 100 can reliably determine the circumferential position of the flattening roller 40.

The DC motor 4502 includes the built-in sensor 454 that detects the rotational phase of the DC motor 4502, or the AC motor 4503 includes the built-in sensor 456 that detects the rotational phase of the AC motor 4503. Accordingly, the three-dimensional fabrication apparatus 100 can more reliably determine the circumferential position of the flattening roller 40.

The above description is a part of the embodiments of the present disclosure, and for example, the rotation drive unit 45 may use a configuration having another positioning function. In addition, the numbers such as ordinal numbers and quantities used in the above-described embodiments are all examples for specifically describing the technology of the present disclosure, and embodiments of the present disclosure are not limited to the exemplified numbers.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A three-dimensional fabrication apparatus (100) comprising:
a flattening member (40) configured to move on layers of a fabrication material to flatten an upper surface of the layers of the fabrication material; and
a rotation drive unit (45) configured to rotate the flattening member (40) and determine a circumferential position of the flattening member (40).

2. The three-dimensional fabrication apparatus (100) according to claim 1, further comprising circuitry (8) configured to control the rotation drive unit (45),
wherein the circuitry (8) outputs, while the flattening member (40) moves on the layers of the fabrication material, command data corresponding to a position where the flattening member (40) moves, to the rotation drive unit (45) to control a rotational phase of the rotation drive unit (45).

3. The three-dimensional fabrication apparatus (100) according to claim 2, wherein the circuitry (8) controls the rotation drive unit (45) to have an identical rotational phase in both of when the flattening member (40) moves on an n-th layer of the layers of the fabrication material and when the flattening member (40) moves on an (n+1)-th layer of the layers of the fabrication material.

4. The three-dimensional fabrication apparatus (100) according to claim 3, wherein the circuitry (8) controls the rotation drive unit (45) to rotate the flattening member (40) an integer number of times after the flattening member (40) starts moving from a start position to flatten the n-th layer and before the flattening member (40) starts moving from the start position to flatten the (n+1)-th layer.

5. The three-dimensional fabrication apparatus (100) according to claim 3, wherein the circuitry (8) controls the rotation drive unit (45) to rotate the flattening member (40) to correct the circumferential position of the flattening member (40) after the flattening member (40) finishes flattening the n-th layer and before the flattening member (40) starts moving from a start position to flatten the (n+1)-th layer.

6. The three-dimensional fabrication apparatus (100) according to claim 5, further comprising a fabrication unit (2) configured to cure the layers of the fabrication material,
wherein the circuitry (8) controls the rotation drive unit (45) to rotate the flattening member (40) at the start position to correct the circumferential position of the flattening member (40) while the fabrication unit (2) cures the layers of the fabrication material.

7. The three-dimensional fabrication apparatus (100) according to claim 3,
wherein the rotation drive unit (45) includes:
a drive source (450); and
a drive transmitter (451) configured to transmit a rotational driving force of the drive source (450) to the flattening member (40), and to reduce a rotation speed of the drive source (450) based on a speed reduction ratio, and
wherein the circuitry (8) controls the rotation drive unit (45) to rotate the flattening member (40) an integer number of times based on the speed reduction ratio after the flattening member (40) starts moving from a start position to flatten the n-th layer and before the flattening member (40) starts moving from the start position to flatten the (n+1)-th layer.

8. The three-dimensional fabrication apparatus (100) according to any one of claims 1 to 7,
wherein the rotation drive unit (45) includes a drive source (450) selected from the group consisting of a stepper motor (4501), a direct current motor (4502), and an alternating current motor (4503).

9. The three-dimensional fabrication apparatus (100) according to claim 8, wherein the direct current motor (4502) includes a built-in sensor (454) configured to detect a rotational phase of the direct current motor (4502).

10. The three-dimensional fabrication apparatus (100) according to claim 8, wherein the alternating current motor (4503) includes a built-in sensor (454) configured to detect a rotational phase of the alternating current motor (4503).
